# FASCICULE DE BREVET EUROPEEN

(11) **EP 0 672 291 B1**
(45) Date de publication et mention de la délivrance du brevet: **31.05.2000**
(21) Numéro de dépôt: 94900892.4
(22) Date de dépôt: 30.11.1993
(51) Int. Cl.: H01B 1/12, C08G 65/32, C08G 81/00, H01M 4/60, G02F 1/155

(54) **COPOLYMERES A PROPRIETES REDOX ET LEUR UTILISATION POUR L'ELABORATION DE MATERIAUX A CONDUCTION MIXTE**
REDOX-COPOLYMERE UND DEREN VERWENDUNG IN DER HERSTELLUNG VON GEMISCHTEM LEITMATERIAL
REDOX COPOLYMERS AND THEIR USE IN PREPARING MIXED CONDUCTION MATERIALS

(30) Priorité: 01.12.1992 FR 9214475
(43) Date de publication de la demande: 20.09.1995
(73) Titulaire: CENTRE NATIONAL DE LA RECHERCHE SCIENTIFIQUE (CNRS), 75016 Paris (FR); HYDRO-QUEBEC, Montréal Québec H2Z 1A4 (CA)
(72) Inventeur: ARMAND, Michel "Les Corjons", F-38410 Saint-Martin-d'Uriage (FR); BARIL, Daniel, Montréal, Québec H1H 3R9 (CA); CHOQUETTE, Yves, Sainte-Julie, Québec J3E 1P4 (CA); MICHOT, Christophe, F-38000 Grenoble (FR); SANCHEZ, Jean-Yves 781, chemin de Chartreuse, F-38330 Saint-Ismier (FR)
(74) Mandataire: Sueur, Yvette
(86) Numéro de dépôt international: FR9301177
(87) Numéro de publication internationale: WO9412986

(56) Documents cités:
- EP-A- 0 033 015
- EP-A- 0 119 912
- EP-A- 0 374 487
- EP-A- 0 409 002
- EP-A- 0 431 547
- WO-A-83/02368
- DE-A- 2 244 235
- DE-A- 3 419 788
- FR-A- 2 646 162
- T. A. SKOTHEIM 'Handbook of Conducting Polymers' 1986 , VOL.1, MARCEL DEKKER , NEW YORK AND BASEL voir page 351 - page 403

## Description

La présente invention concerne des copolymères et leur utilisation pour l'élaboration de matériaux à conduction mixte.

On connaît les électrolytes polymères obtenus par dissolution d'un sel dans un polymère solvatant comportant des hétéroatomes. De tels électrolytes, qui présentent une conductivité ionique, et dont le solvant est un polyoxyde d'éthylène ou un copolymère d'oxyde d'éthylène, sont décrits par exemple dans EP-A-13199 (M. Armand, M. Duclot). Ces électrolytes polymères ont de nombreuses applications, en particulier dans le domaine des générateurs électrochimiques, des systèmes de modulation de la lumière (M. Armand et al, EP-87401555), des capteurs, par exemple pour des membranes sélectives ou de référence (A. Hammou et al, FR-86.09602).

On connaît également des matériaux qui présentent une conduction mixte, c'est-à-dire dans lesquels il y a déplacement simultané d'ions et d'électrons. Ces matériaux peuvent être des matériaux dits d'insertion, parmi lesquels on peut citer les matériaux formés par dissolution de lithium dans un disulfure, par exemple le disulfure de titane, ou dans un oxyde, par exemple les oxydes de vanadium VOₓ (x ≥ 2,1) et les oxydes de manganèse. De tels matériaux sont intéressants en tant que matériaux d'électrode. L'énergie qu'ils permettent de stocker par unité de masse est importante, mais leur cinétique et leur puissance peuvent être limitantes. En outre, ils peuvent être détruits par une surcharge ou une sur-décharge.

Une conductivité mixte en phases hétérogènes est obtenue par dispersion de particules conductrices, telles que les noirs de carbone, dans des polymères, par exemple par dispersion de noir de carbone dans des polymères à conduction ionique. Ces mélanges sont utilisés en particulier dans les générateurs électrochimiques de manière à obtenir un bon échange d'ions et d'électrons avec les matériaux d'électrodes tels que les composés d'insertion. Il est néanmoins difficile dans ces mélanges d'assurer une percolation parfaite au niveau microscopique. En particulier, les noirs de carbone augmentent notablement la viscosité des composites, ce qui a pour conséquence un mauvais mouillage des grains de matériau d'électrode et l'existence d'une porosité résiduelle qui augmente la résistance apparente du milieu.

On connait également des polymères qui possèdent des liaisons π conjuguées et qui présentent essentiellement une conductivité électronique. Ils deviennent conducteurs après insertion d'espèces ioniques, anioniques ou cationiques qui compensent la perte ou le gain d'électrons du réseau d'orbitales π. Ces matériaux possèdent une conductivité de type métallique et ne constituent pas des solvants. La mobilité des espèces ioniques servant à la compensation des charges est très faible du fait de la rigidité du réseau polymère. En outre, la mise en forme de ces matériaux est difficile en raison de leur caractère infusible et généralement insoluble.

Par Watanabe M., et al, Electrochimica Acta 37, n°9 1521 (1992), on connaît des matériaux à conduction mixte obtenus soit par dissolution de LiClO₄ et de LiTCNQ dans un poly(oxyde d'éthylène), soit par copolymérisation radicalaire de vinylferrocène et d'esters acryliques d'oligoéthylène glycol. Les copolymères statistiques obtenus ont un domaine de stabilité chimique et électrochimique réduit et les seules molécules rédox utilisables sont des molécules rédox actives en polymérisation radicalaire, ce qui limite considérablement le choix des matériaux. En outre, la structure du polymère de type peigne obtenue permet difficilement aux unités portant les fonctions rédox de former un empilement favorable aux échanges électroniques.

Par EP-A-0 033 015, on connaît des polymères constitués par des motifs naphtalène diimide reliés par des segments comprenant de 0 à 3 unités oxyde d'alkylène, ou par des segments comprenant de 1 à 5 unités alkylène imine, le groupe alkylène ayant, dans les deux cas, de 1 à 4 atomes de carbone. De tels polymères présentent une bonne conductivité électronique du fait que les segments oxyde d'alkylène ou alkylène imine permettent l'empilement des fonctions rédox. Toutefois, les segments de liaison sont trop courts pour conférer au polymère les propriétés solvatantes qui sont nécessaires pour lui conférer des propriétés de conduction ionique.

La présente invention a pour but de fournir des matériaux macromoléculaires présentant à la fois de bonnes propriétés de conduction mixte et de bonnes propriétés mécaniques.

A cet effet, la présente invention a pour objet des copolymères .

L'invention a également pour objet des matériaux à conduction mixte dont le solvant est constitué essentiellement par au moins l'un des copolymères précités.

Enfin, l'invention a pour objet diverses applications desdits copolymères et desdits matériaux à conduction mixte.
Un copolymère selon la présente invention est un copolymère segmenté constitué essentiellement par des segments organiques A identiques ou différents qui ont une valence i telle que 1 ≤ i ≤ 6, et par des segments B identiques ou différents qui ont une valence j telle que 1 ≤ j ≤ 6, caractérisé en ce que les segments B présentent des propriétés rédox, en ce que les segments A sont des segments solvatants choisis parmi les homopolymères d'oxyde d'éthylène ou d'oxyde de propylène, les copolymères d'oxyde d'éthylène et d'oxyde de propylène, les copolymères d'oxyde d'éthylène ou d'oxyde de propylène avec un comonomère polymérisable par formation de liaisons éthers, en ce que chaque segment A est relié à au moins un segment B par un groupement Y et chaque segment B est relié à au moins un segment A par un groupement Y, le groupement Y étant choisi parmi les groupements éthers, les groupements thioéthers, les groupements amines secondaires, les groupements amines tertiaires, les groupements amides secondaires, les groupements amides tertiaires, les groupements imides, les groupements ammoniums quaternaires, et les groupements comportant une liaison carbone-carbone, et en ce que la moyenne molaire pondérée de i et la moyenne molaire pondérée de j sont chacune supérieures ou égales à 2.

Le segment B contient au moins une unité dérivée d'une molécule aromatique qui peut former aisément des espèces radicalaires anioniques ou cationiques stables par perte ou gain d'au moins un électron. Parmi les unités dérivées d'une molécule aromatique particulièrement appropriées, on peut citer les groupements diimido aromatiques tétracarboxyliques, par exemple le groupement diimido pyromellitique, le groupement diimido benzophénone-tétracarboxylique, le groupement diimido 1,4,5,8-naphtalène tétracarboxylique ou le groupement diimido 3,4,9,10-pérylène tétracarboxylique. On peut également citer les dications quaternaires aromatiques, par exemple le 4,4'-dipyridinium ou le trans 1,2-bis(pyridinium)éthylène. On peut aussi citer les groupements diamino aromatiques substitués, par exemple le groupement 1,4-phénylène diamino ou le groupement 4,4'-stylbènediamino. On peut en outre citer les groupements alkyldiarylamino à noyaux condensés, par exemple le groupement 9,10-dicarbylphénazino ou le groupement N,N'-bis acridino. Enfin on peut citer les groupements dérivés d'hydrocarbures aromatiques, par exemple le 9,10-bis(méthyléne)anthracéne, et les métallocène-di-yles, par exemple le 1,1'-ferrocène-di-yle.

Il est entendu que les segments B utilisables ne sont pas limités aux exemples donnés ci-dessus, mais ils peuvent également être choisis parmi leurs homologues, obtenus par substitution d'atomes d'hydrogène par des groupements carbonés, ou par l'insertion entre les groupements rédox de groupements carbonés permettant de maintenir la conjugaison du système électronique, ou encore par remplacement de groupements hydrocarbonés par des hétéroatomes (par exemple le remplacement de HC≡ par N≡).

Les formules des différents groupements B particuliers cités ci-dessus sont donnés ci-après : 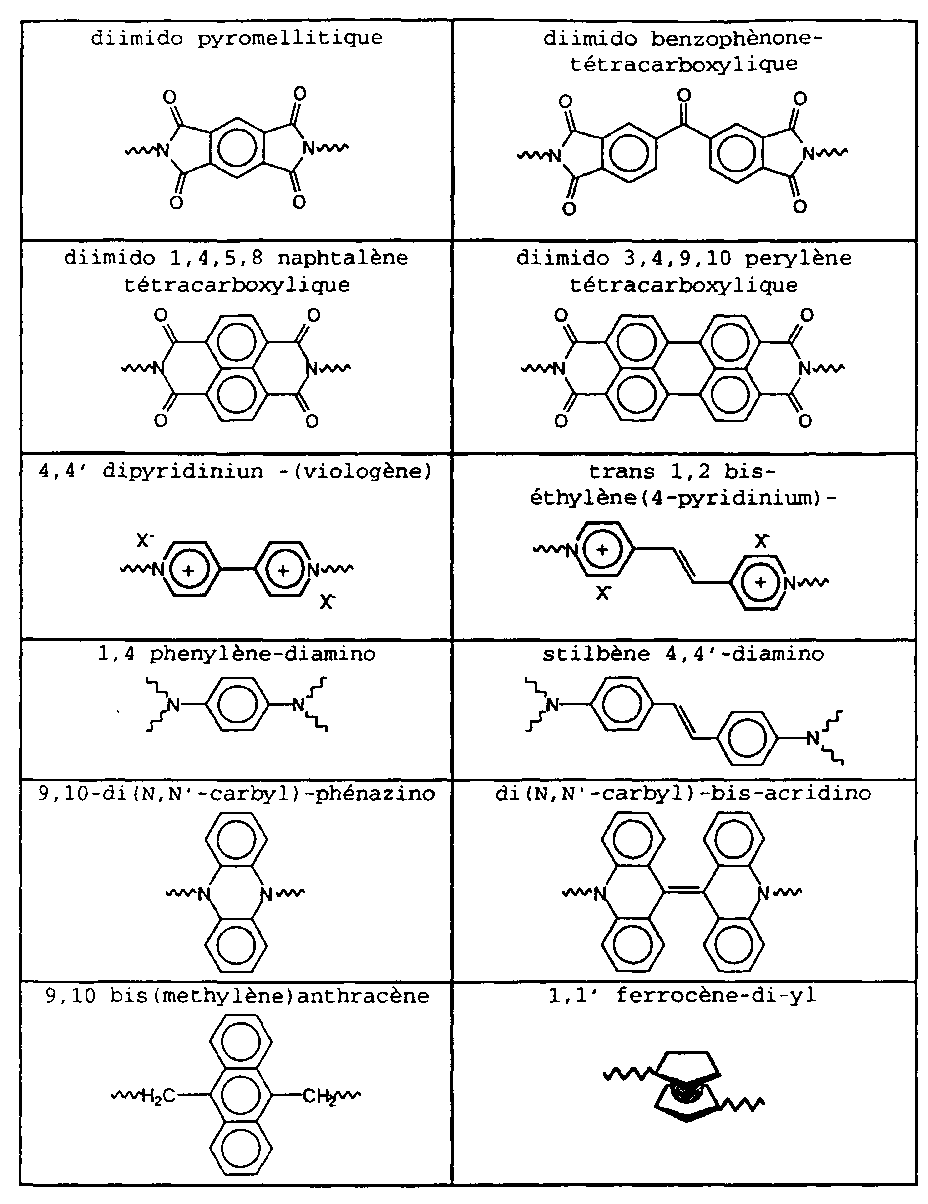 Lorsque le segment A solvatant est un copolymère, le comonomère peut être choisi parmi l'oxyméthylène, l'oxétane, le tétrahydrofurane, le méthylglycidyléther et le dioxolane. Parmi les copolymères, on préfère tout particulièrement ceux qui contiennent au moins 70% en moles d'unités dérivées d'oxyde d'éthylène ou d'oxyde de propylène. Les segments solvatants peuvent également être choisis parmi les polyimines.
Pour que les homopolymères et les copolymères mentionnés ci-dessus comme segment solvatant A présentent effectivement des propriétés de conduction ionique découlant des propriétés solvatantes, il est nécessaire qu'au moins certains parmi les segments A d'un polymère comprennent un nombre d'unités solvatantes suffisant pour entourer un cation en respectant son nombre de coordination. Ce nombre d'unités solvatantes croît en particulier avec le diamètre de l'ion à solvater et l'encombrement du segment rédox B présent. La détermination du nombre d'unités solvatantes que doit comporter un segment A pour apporter la solvatation nécessaire pour conférer au polymère une conduction ionique suffisante, est à la portée de l'homme de métier. Par conduction ionique suffisante, on entend une conduction qui est au moins de 10⁻⁸ S.cm⁻¹ à température ordinaire. A titre indicatif : pour un segment rédox du type diimido pyromellitique, le nombre d'unités solvatantes du type éther doit être d'au moins 3 : pour un segment rédox du type diimido pérylène tétracarboxylique, le nombre d'unités solvatantes du type éther doit être d'au moins 8 ; pour un segment rédox du type diimido naphtalène tétracarboxylique, le nombre d'unités solvatantes du type éther doit être d'au moins 5. Dans la suite du texte, par "segment solvatant", on entendra les segments qui répondent à ces conditions, et qui permettent notamment d'obtenir une conductivité ionique au moins égale à 10⁻⁸ S.cm⁻¹ à température ordinaire.

Les segments A peuvent en outre comprendre une fonction permettant la formation d'un réseau. A titre d'exemple de telle fonction, on peut citer les fonctions permettant une réticulation par voie radicalaire, une réticulation du type Diels Alder ou une polycondensation, par exemple par hydrolyse d'une fonction alcoxy silane. Ces segments A particuliers seront désignés ci-après par segments A'.

Dans un copolymère de la présente invention, une partie des segments A non solvatants peut également être remplacée par des segments A'' non solvatants du type arylène ou alkylarylène lorsque l'on veut augmenter les interactions entre les unités rédox B.

Un avantage des copolymères de la présente invention est qu'ils peuvent être obtenus par des procédés de polycondensation fondés sur des réactions chimiques relativement faciles à mettre en oeuvre, qui dépendent de la nature du groupement Y servant de liaison entre un segment A et un segment B.

De manière générale, un copolymère de la présente invention est obtenu en faisant réagir au moins un composé AZᵢ avec au moins un composé BXⱼ, ou au moins un composé AXᵢ avec au moins un composé BZⱼ, A, i, B et j ayant les significations données ci-dessus, les groupements Z et X étant choisis suivant le groupement Y souhaité, les proportions relatives des différents AZᵢ (ou AXᵢ) étant telles que le rapport du nombre de radicaux Z (ou X) au nombre de segments A soit au moins égal à 2, les proportions relatives des différents BXⱼ (ou BZⱼ) étant telles que le rapport du nombre de radicaux X (ou Z) au nombre de segments B soit au moins égal à 2.

Dans un mode de réalisation particulier, X est un groupement partant et Z est un groupement nucléophile.

Le groupement partant X peut être un halogénure, plus particulièrement un chlorure, un bromure ou un iodure, ou bien un sulfate R'OSO₃ ou un sulfonate R'SO₃ dans lesquels R' représente un groupement organique ayant moins de 20 atomes de carbone. De préférence, R' représente un groupement alkyle, un groupement aryle, un groupement alkylaryle, ces groupements pouvant être éventuellement halogénés. Le groupement partant peut également être généré par un groupement anhydride, un groupement diacide ou un monoacide. Le groupement partant peut en outre être généré par un sel d'onium, par exemple par un sel de diphénylpyridinium.

Un groupement de liaison Y du type éther ou thioéther peut être obtenu à partir d'un groupement Z nucléophile choisi respectivement parmi les groupements -OM ou -SM (M représentant un métal alcalin).

Un groupement de liaison Y du type imide peut être obtenu par réaction d'un groupement partant X généré par un anhydride d'acide avec un groupement nucléophile Z qui est une amine, suivi d'une déshydratation. Il peut également être obtenu par un procédé de transimidification à partir d'une molécule aromatique comportant i groupements imide, par réaction avec un composé A(NH)ᵢ. En outre, un groupement de liaison diimide peut être obtenu par réaction d'une amine avec un diacide, ou par réaction d'un composé AXᵢ sur un sel alcalin d'un composé BZⱼ dans lequel Z représente une fonction imide.

Un groupement de liaison du type amine secondaire peut être obtenu par réaction d'un groupement partant avec un groupement nucléophile amine primaire.

Un groupement de liaison du type amine tertiaire peut être obtenu par réaction d'un groupement partant avec un groupement nucléophile amine secondaire.

Un groupement de liaison du type amide secondaire peut être obtenu par réaction d'un groupement partant avec un groupement nucléophile amide primaire.

Un groupement de liaison du type amide tertiaire peut être obtenu par réaction d'un groupement partant avec un groupement nucléophile amide secondaire.

Un groupement de liaison du type ammonium quaternaire peut être obtenu par réaction d'un groupement partant avec un groupement nucléophile du type amine tertiaire.

Lorsque le groupement Y est une liaison carbone-carbone, le copolymère peut être obtenu par réaction d'un composé organométallique précurseur du segment A avec un composé possédant un groupement partant précurseur du segment B ou réciproquement, la réaction étant catalysée par un complexe de coordination d'un métal de transition tel que le nickel ou le cobalt, la coordination étant assurée par une phosphine.

Les propriétés d'un copolymère selon la présente invention peuvent être prédéterminées par le choix des segments A et/ou des segments B.

Un copolymère selon la présente invention peut comporter des segments A tous identiques. Il peut également comporter des segments A différents. Le choix de segments A solvatants permet de diminuer, voire de supprimer la cristallinité du copolymère et donc d'améliorer sa conductivité ionique. Il peut améliorer également ses propriétés mécaniques. L'introduction de segments non solvatants permet d'adapter certaines propriétés du copolymère, par exemple ses propriétés mécaniques ou la conductivité du réseau ; elle permet également d'apporter des propriétés nouvelles propres aux segments non solvatants telles que l'adhésivité, ou d'introduire des fonctions chimiques.

Lorsqu'en vue de l'utilisation prévue pour un copolymère de la présente invention, il est souhaitable que le copolymère puisse former un réseau, deux solutions sont possibles. On peut remplacer une partie des segments A par des segments A' comportant des groupements réticulables définis ci-dessus. On peut également remplacer une partie des segments B par des segments B' ne présentant pas de propriétés rédox, mais comportant des groupements qui permettent une réticulation. Dans les deux cas, il peut s'agir d'une réticulation radicalaire, d'une réticulation du type Diels Alder, d'une polycondensation, par exemple par hydrolyse d'une fonction alcoxysilane. Dans ce but, lors de la préparation du copolymère, une partie des molécules BXⱼ est remplacée par des molécules B'X_{j'} dans lesquelles B' est un radical qui a la valence j' et qui ne possèdent pas de fonction rédox mais qui possèdent des fonctions réticulables, ou bien au moins une partie des molécules AZᵢ est remplacée par des molécules A'Z_{i'} qui portent une fonction réticulable. La stoechiométrie de la réaction doit alors prendre en compte la totalité des groupements X et Z apportés par les co-réactants.

Les copolymères obtenus dans ce cas particulier sont constitués par des segments organiques A identiques ou différents, ayant chacun une valence i telle que 1 ≤ i ≤ 6, des segments B identiques ou différents dans chacun desquels B représente un radical organique présentant des propriétés rédox et ayant une valence j telle que 1 ≤ j ≤ 6, et des segments A' ayant une valence i' telle que 1 ≤ i' ≤ 6 ou des segments B' identiques ou différents possédant au moins une fonction permettant une réticulation ayant une valence j' telle que 1 ≤ j' ≤ 6;
- chaque segment A ou A' étant relié à au moins un segment Bⱼ ou B'_{j'} par une fonction Y, chaque segment B ou B' étant relié à au moins un segment A ou A' par une fonction Y, la fonction Y étant telle que définie précédemment;
- la moyenne molaire pondérée des valences i et i' des segments A et A' et la moyenne molaire pondérée des valences j et j' de l'ensemble des radicaux Z et Z' étant chacune supérieure ou égale à environ 2.

Les copolymères de la présente invention peuvent être utilisés tels quels ou sous forme réticulée, pour l'élaboration de matériaux à conduction mixte.

Les matériaux à conduction mixte de la présente invention sont essentiellement constitués par un sel facilement dissociable et un copolymère selon la présente invention.

Lorsque le degré de polycondensation du copolymère selon l'invention est suffisant, le copolymère peut être utilisé tel quel pour la préparation d'un matériau à conduction mixte. Toutefois sa mise en oeuvre n'est pas aisée.

On préfère utiliser, pour l'élaboration de matériaux à conduction mixte, des copolymères ayant un degré de polycondensation relativement faible, tel que ceux obtenus à partir d'un ou plusieurs composés AZᵢ et d'un ou plusieurs composes BXⱼ (et eventuellement d'un ou plusieurs composés A'Z_{i'} ou B'X_{j'}), pour lesquels la moyenne molaire pondérée est pratiquement égale à 2 aussi bien pour i (ou i + i') que pour j (ou j + j'). De tels copolymères seront reticulés, après mise en forme, grâce aux fonctions réticulables présentes sur les segments A' et/ou B'.

Pour l'élaboration de matériaux à conduction mixte, il est nécessaire d'utiliser des copolymères dans lesquels au moins une partie des segments A sont des segments solvatants. Les segments A solvatants constitués par des homopolymères d'oxyde d'éthylène ou d'oxyde de propylène ou un copolymère d'oxyde d'éthylène ou d'oxyde de propylène et d'un comonomère polymérisable par formation de liaisons éthers dans lesquels le comonomère représente au plus 30% en moles sont particulièrement préférés. Les copolymères d'oxyde d'éthylène et d'oxyde de propylène sont particulièrement intéressants.

Le sel introduit dans le copolymère avant réticulation ou dans le polymère réticulé est choisi parmi les sels utilisés habituellement pour les matériaux solides à conduction ionique. A titre d'exemple on peut citer les sels (1/mM)⁺X³⁻, M représentant un proton, un ion d'un métal ayant la valence m, choisi parmi les métaux alcalins, les métaux alcalino-terreux, les métaux de transition et les terres rares, ou les ions ammonium, amidinium ou guanidinium ; X³ représentant un anion à charge électronique délocalisée, par exemple Br⁻, ClO₄⁻, AsF₆⁻, R_{F}SO₃⁻, (R_{F}SO₂)₂N⁻, (R_{F}SO₂)₃C⁻, R_{F} représentant un groupement perfluoro alkyle ou perfluoroaryle, particulièrement un groupement perfluoroalkyle ou perfluoroaryle ayant au plus 8 atomes de carbone, plus particulièrement CF₃- ou C₂F₅-.

Le sel peut également être choisi parmi les sels répondant à la formule (1/nM)⁺[(R_{F}SO₂)2CY¹]⁻ dans laquelle Y¹ représente un groupement attracteur d'électrons choisi parmi -C≡N et les groupements R''Z¹- dans lesquels Z¹ représente un groupement carbonyle, un groupement sulfonyle ou un groupement phosphonyle et R'' représente un groupement organique monovalent possédant éventuellement une fonction réticulable par voie radicalaire ou par une réaction de Diels Aider, M et R_{F} ayant la signification donnée précédemment. De tels composés peuvent être préparés par réaction d'un composé (1/nM)⁺[(R_{F}SO₂)₂CH]⁻ avec un composé Y¹X¹ en présence d'une base aprotique nucléophile Nu, X¹ représentant un halogène ou un pseudo-halogène. Les sels de lithium sont particulièrement préférés, plus spécialement (CF₃SO₂)₂N⁻Li⁺ et (CF₃SO₂)₃C⁻Li⁺. Des mélanges de sels peuvent être utilisés. Ces sels et leur procédé de préparation sont décrits dans FR91.13789 déposé le 8.11.1991.

Un matériau à conduction mixte de la présente invention, dans lequel le copolymère selon l'invention est réticulé, est obtenu en soumettant le copolymère à l'action de la chaleur ou d'un rayonnement énergétique tel qu'un rayonnement ultraviolet, des rayons γ ou un faisceau d'électrons, éventuellement en présence d'un amorceur radicalaire. L'amorceur radicalaire peut être choisi par exemple parmi le peroxyde de benzoyle, l'azo bis isobutyronitrile (AIBN), l'acide azobis cyanovalérique, le peroxyde de dicumyle (Dicup) ou les disulfures, par exemple l'acide 3,3'-dithiodipropionique. Les sels (1/nM)⁺[(R_{F}SO₂)₂CY¹]⁻ définis ci-dessus, dans lesquels Y¹ contient une source de radicaux libres, peuvent être utilisés comme armorceurs radicalaires. L'amorceur radicalaire n'est pas nécessaire lorsque la réticulation se fait par une réaction de Diels Alder.

Dans un premier mode de réalisation, un matériau à conduction mixte est obtenu par dissolution du copolymère, du sel, et éventuellement d'un amorceur radicalaire, dans un solvant commun. La quantité d'amorceur utilisée est avantageusement de 0,1 à 5% en poids par rapport au copolymère. Le solvant est choisi parmi les solvants volatils ; à titre d'exemple de tel solvant, on peut citer l'acétonitrile, le tétrahydrofurane et l'acétone. La solution visqueuse obtenue est dégazée, puis épandue sur un support approprié, par exemple une plaque de PTFE. Après évaporation du solvant, le film obtenu est porté à une température entre 70°C et 120°C selon l'amorceur utilisé, pendant 4 heures.

Dans un autre mode de réticulation, on effectue d'abord la réticulation du copolymère, en l'absence de sel, et l'on élabore ensuite une membrane. Le sel est alors introduit dans la membrane de la manière suivante : on réalise une solution très concentrée du sel dans un solvant polaire volatil, on la fait absorber par la membrane, puis l'on évapore le solvant. La quantité de sel introduite est déterminée par différence entre le poids initial de la membrane et son poids final.

Dans un troisième mode de réalisation, la réticulation d'un copolymère de la présente invention est effectuée à l'aide d'un amorceur radicalaire de polymérisation, en présence d'un monomère portant un groupement ionique et un groupement réticulable par voie radicalaire. Des exemples de tels monomères sont décrits dans FR92.02027 déposé le 21.02.1992.

Bien entendu, les matériaux à conduction mixte de la présente invention peuvent contenir en outre des additifs utilisés habituellement dans les matériaux à conduction ionique tels que des plastifiants, des stabilisants, suivant les propriétés finales recherchées.

Les matériaux à conduction mixte de la présente invention peuvent être préparés facilement et leur mise en oeuvre est aisée du fait de leur bonne solubilité avant réticulation lorsque les moyennes molaires pondérées respectives de i et de j ne sont pas supérieures à environ 2.

Un matériau obtenu à partir d'un copolymère de la présente invention, en raison de l'activité rédox couplée avec une bonne conductivité ionique, peut être avantageusement utilisé comme composant actif d'une électrode, seul ou en mélange avec des composés d'insertion, pour les générateurs tout solide ou pour les générateurs dont l'électrolyte est soit plastifié, soit sous forme d'un gel constitué par un polymère et un solvant liquide. Lorsqu'un tel matériau est utilisé en mélange avec un composé d'insertion, la cinétique rapide d'échange d'électrons lui permet de se substituer en totalité ou en partie à l'agent servant à assurer la conductivité électronique, en particulier au noir de carbone. En outre, il permet de disposer d'une réserve de capacité et surtout de puissance pour ce type de générateur. Cette possibilité est particulièrement avantageuse lorsque le matériau de l'invention est utilisé dans une électrode positive en choisissant un copolymère ayant un potentiel de couple rédox légèrement inférieur à celui du matériau d'insertion. Dans ces conditions, le copolymère rédox récupère sa capacité initiale après la fin de la demande de puissance.

Les matériaux comportant les copolymères de la présente invention permettent en outre d'améliorer le fonction des générateurs électrochimiques et d'éviter leur dégradation prématurée. L'incorporation dans l'une au moins de leurs électrodes d'un copolymère rédox dont le potentiel est convenablement choisi permet d'indiquer par lecture de la f.e.m., la fin du processus de charge ou de décharge avant que ne se produise une dégradation du système. D'une manière similaire, l'utilisation d'un copolymère de la présente invention dans une électrode composite permet de moduler la fenêtre de potentiel dans laquelle les échanges électroniques peuvent se produire. Avantageusement, le matériau à conduction mixte contient un copolymère selon la présente invention choisi de manière à perdre sa conductivité électronique à la fin de la recharge du matériau d'insertion contenu dans l'électrode composite.

Dans les matériaux de la présente invention, l'injection (réduction) ou l'extraction (oxydation) d'électrons s'accompagne d'un changement de couleur. Cette propriété permet leur utilisation pour l'électrode négative d'un dispositif de modulation de la lumière, en particulier pour les vitrages ou les revêtements électrochromes. Le caractère filmogène des copolymères de la présente invention est particulièrement avantageux pour leur mise en oeuvre pour cette application particulière. Les différents segments constituant le copolymère peuvent être choisis de telle manière que le copolymère puisse être réticulé ou polycondensé après mise en forme, et qu'il présente une bonne adhérence au support (généralement du verre ou une couche d'oxyde) par ensimage.

Enfin, du fait de leur conductivité électronique, les matériaux à conduction mixte de la présente invention peuvent être avantageusement utilisés pour l'élimination des charges d'électricité statique.

La présente invention est illustrée par les exemples suivants donnés à titre illustratif mais non limitatif.

### EXEMPLE 1

21,8 g d'anhydride pyromellitique et 63,5 g de O,O'-bis(2-aminopropyl)poly(oxyéthylène 500) (Jeffamine® ED600) commercialisé par la société Texaco sont dissous dans 200 ml d'un mélange équivolumique de pyridine et d'acétonitrile. Le mélange est agité à température ordinaire pendant 5 heures pendant lesquelles l'acide polyamique se forme par action des fonctions amine sur les fonctions anhydride cyclique. Au mélange sont alors ajoutés 50 ml d'anhydride acétique permettant la transformation des fonctions acide-amide en cycles imides. L'agitation est poursuivie pendant 2 heures. Le polymère résultant est précipité en versant le mélange réactionnel dans 800 ml de diéthyl éther maintenu à - 10°C. Le polymère est purifié par trois opérations de dissolution dans l'acétone et précipitation dans l'éther à -10°C.

### EXEMPLE 2

4,4 g de poly(oxyde d'éthyléne) de masse moléculaire 9.10⁵ sont dissous dans 80 ml de dichlorométhane anhydre, l'opération étant effectuée dans un boîte à gants sous atmosphère d'argon contenant ≤ 1 vpm d'oxygène et de vapeur d'eau. La solution est refroidie à -15°C et on ajoute, sous agitation, une solution de 1,87 ml d'anhydride trifluorométhanesulfonique dans 10 ml d'hexane. Une réaction de coupure se produit pour former un ester triflique d'oligooxyéthylène glycol de masse moyenne 900. Au mélange réactionnel est ajouté 1,73 g de 4,4'-dipyridyle en solution dans 10 ml de dichlorométhane. L'agitation est maintenue à -15°C pendant 2 heures et on laisse le réacteur revenir à température ordinaire. L'agitation est poursuivie pendant 8 heures. Le solvant (dichlorométhane + hexane) est partiellement éliminé à l'aide d'un évaporateur rotatif pour laisser une suspension turbide d'environ 30 ml. Le polymère est précipité par l'éther anhydre, et purifié par 4 cycles de dissolution / précipitation dans le couple solvant : acétonitrile / non-solvant : éther.

### EXEMPLE 3

3,92 g d'anhydride 3,4,9,10 pérylène tétracarboxylique et 6,35 g de O,O'-bis(2-aminopropyl)poly(oxyéthylène 800) (Jeffamine® ED900) commercialisé par la société Texaco sont dissous dans 30 ml de diméthylacétamide. Dans un réacteur muni d'une agitation mécanique, le mélange est porté à 160°C sous argon pendant 3 heures. Le polymère résultant de couleur rouge est précipité en versant le mélange réactionnel dans 200 ml d'un mélange diéthyl éther/ hexane. Il est ensuite purifié par ultrafiltration dans l'eau en utilisant une membrane dont la masse de coupure est de Mw = 5000. L'électroactivité de ce matériau est vérifiée par une technique de voltammétrie sur microélectrode. La chaîne électrochimique est la suivante :

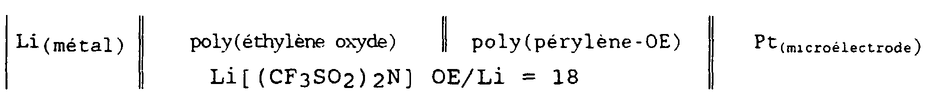

Le caractère rapide et réversible de l'injection d'électrons à Eₒ = 2,6 et 2,4 V/Li:Li° dans le matériau est mis en évidence. Ce polymère présente par ailleurs des propriétès électrochromes marquées, passant de la couleur rouge rubis à l'état neutre au violet foncé après réduction.

### EXEMPLE 4

Cet exemple illustre la possibilité de préparer le polymère par un procédé de trans-imidification : 27 g d'anhydride 1,4,5,8-naphtalène tétracarboxylique sont traités par 17 ml de propylamine dans 50 ml de pyridine. Après réaction de formation de l'acide-amide par ouverture des cycles anhydride, on ajoute 25 ml d'anhydride acétique. La N,N'-bispropylnaphtalène tétracarboximide est précipitée par l'eau et purifiée par recristallisation dans l'éthanol.

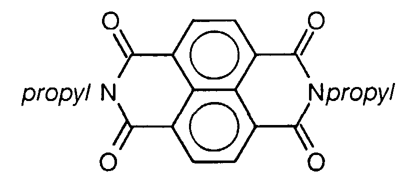

A 19,32 g d'imide sont ajoutés 42,5 g de O,O'-bis-2(aminopropyl)poly(oxyéthylène 800) (Jeffamine® ED900) et 2,2 g de dianhydride de l'acide bicyclo[2,2,2]oct-7-ène-2,3,5,6,tétracarboxylique (agent de réticulation) dans 150 ml de diméthylacétamide anhydre. Dans un réacteur muni d'une agitation mécanique le mélange est porté à 160°C en maintenant un flux d'argon pendant 3 heures. Le polymère résultant de couleur brune est précipité en versant le mélange réactionnel dans l'éther anhydre maintenu à -10°C. Le matériau est purifié par trois opérations successives de dissolution/précipitation dans les solvants dichlorométhane/éther. Ce polymère est réticulable par un procédé par voie radicalaire agissant sur les groupements dimido bicyclo[2,2,2]oct-7-ène-2,3,5,6,tétracarboxylique.

### EXEMPLE 5

15,62 g de 4,4'-dipyridyle, 26,2 g d'acide itaconique et 100 ml d'une solution aqueuse 2M d'acide trifluorométhane sulfonique sont chauffés au reflux pendant 4 heures. La solution est évaporée sous pression réduite et le solide résultant est purifié par recristallisation dans l'isopropanol. Sa structure est représentée par :

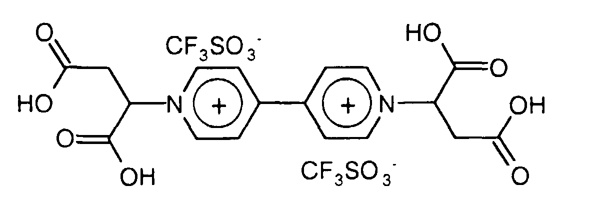

7,16 g du composé précédent, 5,71 g de O,O'-bis(2-aminopropyl)poly(oxyéthylène 500) (Jeffamine® ED600) et 0,207 g de bis-(aminopropyl)diméthoxysilane sont dissous dans 30 ml de diméthylformamide. On ajoute 10 ml de pyridine et 5 g de dicyclohexylcarbodiimide. Le mélange est agité sous argon pendant 30 heures à température ordinaire. Le polymère formé a pour structure majoritaire:

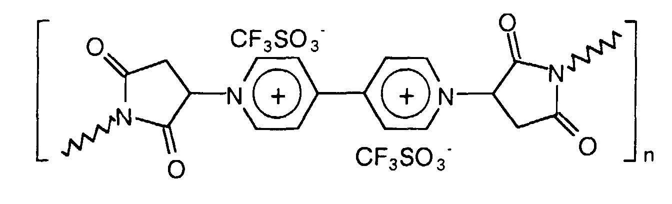

### EXEMPLE 6

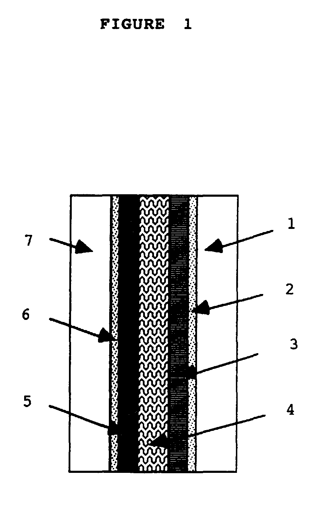

On constitue un système électrochrome dont la structure est schématisée sur la Figure 1. Le système électrochimique représenté sur la figure 1 comprend un substrat de verre (1), une couche d'oxyde de zinc dopée (2), une couche de polymère (3), un électrolyte (4), une contre-électrode (5), une couche d'oxyde de zinc (6) et un substrat de verre (7). 0,5 g de polymère de l'exemple 6 sont dissous dans 3 ml de diméthylformamide avec 80 mg de trifluorométhanesulfonate de lithium. La solution est déposée en utilisant la méthode de la tournette ("spin coating") de manière à obtenir une couche de 1 µm (3) sur un substrat de verre plat (1) recouvert au préalable par pulvérisation cathodique réactive d'une couche de 120 nm de d'oxyde de zinc dopé à l'aluminium (2). Le film (3) est réticulé par traitement à l'air à 60°C pendant deux heures. La contre-électrode (5) est constituée par un mélange équimoléculaire 50/50 d'oxyde de cérium et d'oxyde de titane déposé par procédé sol-gel pour former une couche de 200 nm d'épaisseur au dessus d'une couche (6) d'oxyde de zinc analogue à la couche (2) sur verre (7). L'oxyde mixte de cérium/titane est préalablement réduit par insertion électrochimique de 5.10⁻² Coulombs de lithium. Les deux électrodes sont séparées par un électrolyte (4) obtenu par poly-condensation du poly(éthylène glycol) de masse 1500 avec le chlorométhyl-2-chloropropène-3 et dans lequel est dissous du bis(trifluorométhylsulfonyl)imidure de lithium à la concentration de 1 mole de sel pour 18 motifs oxyéthylène.

Le système électrochrome, dans lequel le polymère rédox constitue l'électrode négative, fonctionne par application d'une tension de 1,5 Volts. Une coloration bleue apparaît en quelques secondes ; elle est stable en circuit ouvert et disparaît par mise en court-circuit des électrodes. Un dispositif similaire est réalisable en remplaçant le substrat de verre par un film de polymère de type PET ou polysulfone.

### EXEMPLE 7

25 g de α,ω-dibromooligooxyéthylène sont préparés à partir de polyéthylène glycol de masse 1000 par action dans l'acétonitrile d'un excès de bromure de thionyle en présence d'une résine échangeuse d'ions basique de type Amberlyst® A21 (Rohm & Haas). Le mélange réactionnel est filtré et le polymère est précipité dans l'éther refroidi à -10°C. La purification s'effectue de même par dissolution / précipitation dans le couple dichlorométhane-éther. Une étude de masse moléculaire par chromatographie d'exclusion stérique et la détermination de la teneur en halogène (AgNO₃/AgBr) donne une fonctionnalité de 2 et une masse moyenne Mw = 1035. 3,53 g de phénazine sont dissous dans 15 ml de THF anhydre et on ajoute, sous atmosphère d'argon, 0,5 g de lithium métallique. Le mélange est agité par l'intermédiaire d'un barreau magnétique recouvert de polyéthylène. Après réaction apparaît un précipité jaune du sel du dianion. L'excès de lithium métallique est séparé et 14,49 g du α,ω-dibromooligooxyéthylène préparé précédemment sont ajoutés ; le mélange est agité à température ordinaire pendant 20 heures et le produit réactionnel est précipité dans l'éther. Le polymère obtenu est purifié dans l'eau à l'aide d'une membrane d'ultrafiltration de seuil de coupure à Mw = 5000. L'eau est évaporée et on obtient un polymère de couleur brun-vert. Le complexe formé par dissolution du bis(trifluorométhylsulfonyl)imidure de lithium présente une activité rédox réversible à + 3.5 V/Li:Li°.

### EXEMPLE 8

525 mg de α,ω-bis(aminopropyl) poly(tétrahydrofurane) 750 sont dissous dans l'acétonitrile et on ajoute 640 mg de trifluorométhylsulfonate de triphénylpyrilium. La formation du trifluorométhylsulfonate α,ω-bis(triphénylpyridiniumpropyl)-polytétrahydrofurane 750 est instantanée. Le polymère est précipité par l'eau puis séché sous vide à 40°C. 0,832 g de ce matériau sont dissous dans 5 ml de THF anhydre et ajoutés à 194 mg de dilithiophénazine telle que préparée à l'exemple 7. Le polymère résultant est précipité par l'eau et purifié par dissolution précipitation dans les couple de solvants THF/eau puis dichlorométhane/éther. On obtient après séchage un élastomère présentant comme celui de l'exemple 7 des propriétés rédox avec une oxydation apparaissant entre 3,2 et 3,6 V/Li:Li°.

### EXEMPLE 9

Un générateur électrochimique est constitué par une électrode négative de lithium métallique de 18 µm d'épaisseur laminé sur un collecteur de courant en polypropylène (8 µm) métallisé par 150 nm de molybdène. L'électrolyte est constitué par un copolymère d'oxyde d'éthylène et d'allylglycidyl éther permettant un réticulation sous forme de film de 40 µm et chargé en bis(trifluorométhylsulfonyl)imidure de lithium pour un rapport O/Li de 14. L'électrode positive contient 55% en volume du polymère de l'exemple 3 après dissolution de bis(trifluorométhylsulfonyl)imidure de lithium à la concentration de 1 mole de sel pour 14 motifs oxyéthylène, 40% de manganite de lithium Li_{0,2}Mn₂O₄ et 5% de noir de carbone de type Ketjenblack® (AKZO Chemicals). Le matériau composite est dispersé et broyé dans l'acétonitrile et épandu sur un collecteur de courant identique à celui de l'électrode négative, de manière à former un film de 95 µm d'épaisseur. Le système électrochimique est assemblé par laminage. L'utilisation d'un polymère à conduction mixte à l'électrode positive permet d'obtenir des puissances électriques élevées sur plusieurs dizaines de secondes (J = 2 mAcm⁻² pour V = 2,5 V à 60°C), la cinétique de formation des radicaux anions à l'intérieur du polymère étant plus rapide que celle correspondant à la diffusion des ions lithium dans le matériau d'insertion. La conductivité électronique permet de surcroît de diminuer la proportion de carbone dans la composite, l'avantage résidant dans le poids et l'absence de porosité du film.

### EXEMPLE 10

7 g de poly(oxyéthylène) glycol de masse 1000 sont déshydratés par action de 1 ml de 2,2-diméthoxypropane et évaporation de l'excès de réactif et des produits de réaction sous vide. Le polymère est dissous dans 40 ml de THF anhydre et on y ajoute 350 mg d'hydrure de sodium. Après la fin de la réaction, observable par la cessation du dégagement d'hydrogène, on ajoute 2,75 g de bis(9,10-dichlorométhyl)anthracène. Un précipité de chlorure de sodium est immédiatement observé. Après achèvement de la réaction en quelques heures, la suspension est centrifugée et le surnageant est précipité dans l'éther froid. Le polymère est purifié par ultrafiltration dans l'eau en utilisant une membrane dont le seuil de coupure est de 5000. Après évaporation du solvant, on obtient une matériau souple présentant une activité rédox à + 1,4 V / Li:Li° avec la formation d'un radical anion polymère anth^{·-} et à + 3,4 V/Li:Li° avec la formation d'un radical cation polymère anth^{·+}.

### EXEMPLE 11

Le sel de lithium du 1,1'-bismercapto-ferrocéne est préparé selon la procédure de F. Brandt & T. Rauchfuss [J. Am. Chem. Soc 114, 1926 (1992)]; 12 millimoles de ce sel dans le THF anhydre sont traités par 13,2 g du α,ω-dibromooligooxyéthylène préparé à partir de polyéthylène glycol de masse 1000 selon l'exemple 7. Le mélange est agité à 60°C pendant 3 heures. Le polymère obtenu est élué sur une colonne contenant un mélange de résines échangeuses d'ions (cationiques et anioniques) macroporeuses de manière à éliminer le bromure de lithium formé. Le polymère est précipité par l'éther et purifié par dissolution précipitation (dichlorométhane/éther). Le matériau présente une activité rédox à + 3,5 V/Li:Li°.

### EXEMPLE 12

2 g de Jeffamine® ED2000 et 0,55 g de footballène (buckminsterfullerène) C₆₀ commercialisé par Aldrich, sont mélangés à partir de leurs solutions dans le toluène. La solution est coulée dans un anneau de verre (⌀ = 40 mm) déposé sur une plaque de PTFE poli. Après quelques heures, la solution se gélifie. Par évaporation du solvant, on obtient un solide élastique de couleur jaune foncé présentant une activité rédox à + 2,4 V/Li:Li°.

### EXEMPLE 13

Un générateur électrochimique est constitué selon l'exemple 9. La composition de l'électrode positive est modifiée pour contenir 55% en volume du polymère de l'exemple 7 après dissolution de bis(trifluorométhylsulfonyl)imidure de lithium à la concentration de 1 mole de sel pour 18 motifs oxyéthylène, et 45% de cobaltite de lithium Li_{0,3}CoO₂. La courbe de décharge de ce générateur montre que la cinétique de décharge en dessous du potentiel de Eₗᵢₘᵢₜₑ = 3,4 V est très lente du fait de la disparition de la conductivité électronique du polymère rédox. La cinétique est maximale dans la zone de potentiel 3,5-3,7 Volts.

### EXEMPLE 14

Un générateur électrochimique comporte un électrolyte polymère selon l'exemple 9. Les deux électrodes sont symétriques et constituées par un film du polymère de l'exemple 8 de 10 µm d'épaisseur, chargé de trifluorométhylsulfonate de potassium déposé sur des collecteurs de courant de polypropylène (8 µm) métallisé par 20 nm de nickel. Le générateur est assemblé par laminage. Il présente une capacité de 0,05 Coulombs par cm² pour une tension de 2 V, avec une cinétique très rapide. Ce type de générateur est utilisable comme "supercapacité" pour fournir ou emmagasiner des puissance électriques instantanées élevées.

## Revendications

1. Copolymère segmenté dans lequel la chaîne principale est constituée par des segments organiques A identiques ou différents qui ont une valence i telle que 1 ≤ i ≤ 6, et par des segments B identiques ou différents qui ont une valence j telle que 1 ≤ j ≤ 6, caractérisé en ce que les segments B présentent des propriétés rédox réversibles et contiennent au moins une unité dérivée d'une molécule aromatique qui peut former des espèces radicalaires anioniques ou cationiques stables par perte ou gain d'au moins un électron au moins une partie des segments A sont des segments solvatants, choisis parmi les homopolymères d'oxyde d'éthylène ou d'oxyde de propylène, les copolymères d'oxyde d'éthylène et d'oxyde de propylène, les copolymères d'oxyde d'éthylène ou d'oxyde de propylène avec un comonomère polymérisable par formation de liaisons éthers, chaque segment A est relié à au moins un segment B par un groupement Y et chaque segment B est relié à au moins un segment A par un groupement Y, le groupement Y étant choisi parmi les groupements éther, les groupements thioéther, les groupements amine secondaire, les groupements amine tertiaire, les groupements amide secondaire, les groupements amide tertiaire, les groupements imides, les groupements ammonium quaternaire, et les groupements comportant une liaison carbone-carbone, et en ce que la moyenne molaire pondérée de i et la moyenne molaire pondérée de j sont chacune supérieure ou égale à 2.

2. Copolymère selon la revendication 1, caractérisé en ce que l'unité dérivée d'une molécule aromatique est choisie parmi les groupements diimido aromatiques tétracarboxyliques, par exemple le groupement diimido pyromellitique, le groupement diimido benzophénone-tétracarboxylique, le groupement diimido 1,4,5,8-naphtalène tétracarboxylique et le groupement diimido 3,4,9,10-pérylène tétracarboxylique.

3. Copolymère selon la revendication 1, caractérisé en ce que l'unité dérivée d'une molécule aromatique est choisie parmi les dications quaternaires aromatiques, par exemple le 4,4'-dipyridinium et le trans 1,2-bis(pyridinium)éthylène.

4. Copolymère selon la revendication 1, caractérisé en ce que l'unité dérivée d'une molécule aromatique est choisie parmi les groupements diamino aromatiques substitués, par exemple le groupement 1,4-phénylène diamino et le groupement 4,4'-stylbènediamino.

5. Copolymère selon la revendication 1, caractérisé en ce que l'unité dérivée d'une molécule aromatique est choisie parmi les groupements alkyl diarylamino à noyaux condensés, par exemple le groupement 9,10-dicarbylphénazino et le groupement N,N'-bis acridino.

6. Copolymère selon la revendication 1, caractérisé en ce que l'unité dérivée d'une molécule aromatique est choisie parmi les groupements dérivés d'hydrocarbures aromatiques et les métallocène-di-yles, par exemple le 9,10-bis(méthylène)anthracène et le 1,1'-ferrocène-di-yle.

7. Copolymère selon la revendication 1, caractérisé en ce que le comonomère polymérisable par formation de liaisons éthers est choisi parmi l'oxyméthylène, l'oxétane, le tétrahydrofurane, le méthylglycidyléther et le dioxolane.

8. Copolymère selon la revendication 1, caractérisé en ce que le segment solvatant est choisi parmi les polyimines.

9. Copolymère selon la revendication 1, caractérisé en ce qu'au moins une partie des segments A sont des segments non solvatants choisis parmi les radicaux arylènes et les radicaux arylalkylènes.

10. Copolymère selon la revendication 1, caractérisé en ce qu'au moins une partie des segments A sont remplacés par des segments A' contenant un groupement permettant la formation d'un réseau et/ou une partie des segments B sont remplacés par des segments B' ne comportant pas de fonction rédox, mais comportant un groupement permettant la formation d'un réseau.

11. Matériau contenant un sel et un solvant solide polymère, caractérisé en ce que le solvant polymère est constitué selon la revendication 1.

12. Matériau selon la revendication 11, caractérisé en ce que le copolymère est réticulé.

13. Matériau selon l'une des revendications 11 à 12, caractérisé en ce que le sel est choisi parmi les sels (1/mM)⁺X³⁻, M représentant un proton, un ion d'un métal ayant la valence m, choisi parmi les métaux alcalins, les métaux alcalino-terreux, les métaux de transition et les terres rares, ou les ions ammonium, amidinium ou guanidinium ; X³ représentant un anion à charge électronique délocalisée, par exemple Br⁻, ClO₄⁻, AsF₆⁻, R_{F}SO₃⁻, (R_{F}SO₂)₂N⁻, (R_{F}SO₂)₃C⁻, ou (R_{F}SO₂)₂CY¹⁻, R_{F} représentant un groupement perfluoroalkyle ou perfluoroaryle et Y¹ représentant un groupement attracteur d'électrons.

14. Générateur électrochimique comportant un électrolyte solide polymère ou un électrolyte plastifié, ou un électrolyte sous forme d'un gel constitué par un polymère et un solvant liquide, caractérisé en ce qu'au moins l'une de ses électrodes contient un copolymère segmenté constitué selon la revendication 1.

15. Dispositif de modulation de la lumière, caractérisé en ce qu'il est comporte une électrode négative constituée essentiellement par un copolymère segmenté selon la revendication 1.

## Claims

1. A segmented copolymer the main chain of which consists of identical or different organic segments A which have a valency i such that 1 ≤ i ≤ 6 and by identical or different segments B which have a valency j such that 1 ≤ j ≤ 6, characterized in that the segments B present reversible redox properties, at least part of the segments A are solvating segments selected from homopolymers of ethylene oxide or propylene oxide, ethylene oxide and propylene oxide copolymers, and ethylene oxide or propylene oxide copolymers with a comonomer polymerizable by the formation of ether bonds, each segment A is linked to at least one segment B by a group Y and each segment B is linked to at least one segment A by a group Y, with the group Y being chosen from among ether groups, thioether groups, secondary amine groups, tertiary amine groups, secondary amide groups, tertiary amide groups, imide groups, quaternary ammonium groups, and groups containing a carbon-carbon bond, and by the fact that the weighted molar average of i and the weighted molar average of j are each greater than or equal to 2.

2. A copolymer according to Claim 1, characterized in that the unit derived from an aromatic molecule is selected from the aromatic tetracarboxylic diimide groups, for example, the pyromellitic diimide group, the benzophenone-tetracarboxylic diimide group, the 1,4,5,8-naphthalenetetracarboxylic dimide group and the 3,4,9,10-perylenetetracarboxylic group.

3. A copolymer according to Claim 1, characterized in that the unit derived from an aromatic molecule is selected from the aromatic quaternary dications, for example, 4,4'-dipyridinium and trans-1,2-bis(pyridinium)ethylene.

4. A copolymer according to Claim 1, characterized in that the unit derived from an aromatic molecule is selected from the substituted aromatic diamine groups, for example, the 1,4-phenylenediamine group and the 4,4'-stilbenediamine group.

5. A copolymer according Claim 1, characterized in that the unit derived from an aromatic molecule is selected from the condensed-ring diarylaminoalkyl groups, for example, the 9,10-dicarbylphenazine group and the N,N'-bisacridine group.

6. A copolymer according to Claim 6, characterized in that the unit derived from an aromatic molecule is selected from the groups derived from aromatic hydrocarbons and the metallocenediyls, for example, 9,10-bis(methylene)anthracene and 1,1'-ferrocenediyl.

7. A copolymer according to Claim 1, characterized in that the comonomer polymerizable by formation of ether bonds is selected from oxymethylene, oxetane, tetrahydrofuran, methyl glycidyl ether and dioxolane.

8. A copolymer according Claim 1, characterized in that the solvating segment is selcted from the polyimines.

9. A copolymer according to Claim 12, characterized in that at least a portion of the segments A are non solvating segments selected from the arylene radicals and the arylalkylene radicals.

10. A copolymer according to Claim 1, characterized in that at least a portion of the segments A are replaced by segments A' containing a group that makes it possible for a network to form and/or a portion of the segments B are replaced by segments B' not containing any redox function, but containing a group that makes it possible for a network to form.

11. A mixed conduction material containing a salt and a polymeric solid solvent, characterized in that the polymeric solvent consists of a segmented copolymer according to claim 1.

12. A material according to Claim 11, characterized in that the copolymer is crosslinked.

13. A material according to any of Claims 11 or 12, characterized in that the salt is selected from the salts (1/nM)⁺X³⁻ salts, with M representing a proton, an ion of a metal with valency m, chosen from among the alkali metals, the alkaline-earth metals, the transition metals and rare earths, or the ammonium, amidinium or guanidinium ions ; with X³ representing an anion with a delocalized electron charge, for example, Br⁻, ClO₄⁻, AsF₆⁻, R_{F}SO₃⁻, (R_{F}SO₂)₂N⁻, (R_{F}SO₂)₃C⁻, and [(R_{F}SO₂)₂CY¹]⁻, with R_{F} representing a perfluoroalkyl or perfluoroaryl group, and Y¹ representing an electron-attracting group.

14. An electrochemical generator including a polymeric solid electrolyte or a plasticized electrolyte, or an electrolyte in the form of a gel consisting of a polymer and liquid solvent, characterized in that at least one of its electrodes contains a segmented copolymer according to claim 1.

15. A light modulation device, characterized in that it includes a negative electrode consisting essentially of a segmented copolymer according to claim 1.

## Patentansprüche

1. Segmentcopolymer, in dem die Hauptkette aus gleichen oder unterschiedlichen organischen Segmenten A mit einer Valenz i, wobei gilt : 1 ≤ i ≤ 6, und aus gleichen oder unterschiedlichen Segmenten B mit einer Valenz j, wobei gilt : 1 ≤ j ≤ 6, besteht, dadurch gekennzeichnet, dass die Segmente B reversible Redoxeigenschaften besitzen und zumindest eine Einheit enthalten, die von einem aromatischen Molekül abgeleitet ist, das durch Abgabe oder Aufnahme von zumindest einem Elektron stabile anionische oder kationische Radikalspezies bilden kann, wobei zumindest ein Teil der Segmente A solvatisierende Segmente sind, ausgewählt aus Homopolymeren von Ethylenoxid oder Propylenoxid, Copolymeren von Ethylenoxid und Propylenoxid und Copolymeren von Ethylenoxid oder Propylenoxid mit einem durch Bildung von Etherbindungen polymerisierbaren Comonomer, wobei jedes Segment A über eine Gruppe Y mit zumindest einem Segment B verbunden ist und jedes Segment B über eine Gruppe Y mit zumindest einem Segment A verbunden ist, wobei die Gruppe Y aus Ether-, Thioether-, sekundären Amino-, tertiären Amino-, sekundären Amid-, tertiären Amid-, Imid-, quaternären Ammonium- und eine Kohlenstoff-Kohlenstoff-Bindung aufweisenden Gruppen ausgewählt ist, und dass das gewichtete Molmittel von i und das gewichtete Molmittel von j jeweils ≥ 2 sind.

2. Copolymer nach Anspruch 1, dadurch gekennzeichnet, dass die von einem aromatischen Molekül abgeleitete Einheit aus aromatischen Tetracarbonsäurediimido-Gruppen ausgewählt ist, z.B. die Pyromellithsäurediimido-Gruppe, die Benzophenontetracarbonsäurediimido-Gruppe, die 1,4,5,8-Naphthalintetracarbonsäurediimido-Gruppe und die 3,4,9,10-Perylentetracarbonsäurediimido-Gruppe.

3. Copolymer nach Anspruch 1, dadurch gekennzeichnet, dass die von einem aromatischen Molekül abgeleitete Einheit aus quaternären aromatischen Dikationen ausgewählt ist, z.B. aus 4,4'-Dipyridinium und trans-1,2-Bis(pyridinium)ethylen.

4. Copolymer nach Anspruch 1, dadurch gekennzeichnet, dass die von einem aromatischen Molekül abgeleitete Einheit aus substituierten aromatischen Diaminogruppen ausgewählt ist, z.B. die 1,4-Phenylendiamino-Gruppe und die 4,4'-Stilbendiamino-Gruppe.

5. Copolymer nach Anspruch 1, dadurch gekennzeichnet, dass die von einem aromatischen Molekül abgeleitete Einheit aus Alkyldiarylamino-Gruppen mit kondensierten Kernen ausgewählt ist, z.B. die 9,10-Dicarbylphenazino-Gruppe und die N,N'-Bisacridino-Gruppe.

6. Copolymer nach Anspruch 1, dadurch gekennzeichnet, dass die von einem aromatischen Molekül abgeleitete Einheit aus von aromatischen Kohlenwasserstoffen und Metallocendiylen abgeleiteten Gruppen ausgewählt ist, z.B. 9,10-Bis(methylen)anthracen und 1,1'-Ferrocendiyl.

7. Copolymer nach Anspruch 1, dadurch gekennzeichnet, dass das durch Bildung von Etherbindungen polymerisierbare Comonomer aus Oxymethylen, Oxetan, Tetrahydrofuran, Methylglycidylether und Dioxolan ausgewählt ist.

8. Copolymer nach Anspruch 1, dadurch gekennzeichnet, dass das solvatisierende Segment aus Polyiminen ausgewählt ist.

9. Copolymer nach Anspruch 1, dadurch gekennzeichnet, dass zumindest ein Teil der Segmente A nicht-solvatisierende Segmente sind, die aus Arylen- und Arylalkylenresten ausgewählt sind.

10. Copolymer nach Anspruch 1, dadurch gekennzeichnet, dass zumindest ein Teil der Segmente A durch Segmente A' ersetzt ist, die eine Gruppe enthalten, welche die Bildung eines Netzwerks ermöglicht, und/oder dass ein Teil der Segmente B durch Segmente B' ersetzt ist, die keine Redoxfunktion aufweisen, jedoch eine Gruppe tragen, die die Bildung eines Netzwerks ermöglicht.

11. Material, das ein Salz und ein festes polymeres Lösungsmittel enthält, dadurch gekennzeichnet, dass das polymere Lösungsmittel nach Anspruch 1 zusammengesetzt ist.

12. Material nach Anspruch 11, dadurch gekennzeichnet, dass das Copolymer vernetzt ist.

13. Material nach einem der Ansprüche 11 und 12, dadurch gekennzeichnet, dass das Salz aus den Salzen (1/mM)⁺X³⁻ ausgewählt ist, wobei M ein Proton, ein Ion eines Metalls mit der Valenz m, ausgewählt aus Alkalimetallen, Erdalkalimetallen, Übergangsmetallen und Seltenen Erden, oder ein Ammonium-, Amidinium- oder Guanidiniumion darstellt ; wobei X³ ein Anion mit delokalisierter elektrischer Ladung darstellt, z.B. Br⁻, ClO₄⁻, AsF₆⁻, R_{F}SO₃⁻, (R_{F}SO₂)₂N⁻, (R_{F}SO₂)₃C⁻oder (R_{F}SO₂)₂CY¹⁻ ; wobei R_{F} eine Perfluoralkyl- oder Perfluoraryl-Gruppe darstellt und Y¹ eine Elektronen anziehende Gruppe darstellt.

14. Elektrochemischer Generator, umfassend einen polymeren Festelektrolyten oder einen plastifizierten Elektrolyten oder einen Elektrolyten in Form eines Gels, das aus einem Polymer und einen flüssigen Lösungsmittel besteht, dadurch gekennzeichnet, dass zumindest eine seiner Elektroden ein Segmentcopolymer nach Anspruch 1 enthält.

15. Lichtmodulationsvorrichtung, umfassend eine negative Elektrode, die im Wesentlichen aus einem Segmentcopolymer nach Anspruch 1 besteht.
